Europäisches Patentamt

European Patent Office

Office européen des brevets

(19)

(11) Numéro de publication : **0 294 269 B1**

(12) **FASCICULE DE BREVET EUROPEEN**

(45) Date de publication du fascicule du brevet :
03.04.91 Bulletin 91/14

(51) Int. Cl.⁵ : **B60R 22/20**

(21) Numéro de dépôt : **88401242.8**

(22) Date de dépôt : **20.05.88**

(54) **Dispositif de maintien pour sangle de ceinture de sécurité à position modifiable.**

(30) Priorité : **27.05.87 FR 8707510**

(43) Date de publication de la demande :
**07.12.88 Bulletin 88/49**

(45) Mention de la délivrance du brevet :
**03.04.91 Bulletin 91/14**

(84) Etats contractants désignés :
**DE ES GB IT SE**

(56) Documents cités :
**DE-A- 2 460 092**
**DE-A- 3 116 909**
**DE-A- 3 319 071**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Escaravage, Gérard**
**5 Impasse des Graverots**
**F-25700 Valentigney (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention est relative aux ceintures de sécurité pour véhicules de transport de passagers notamment terrestres et a pour objet, plus particulièrement, un dispositif de maintien pour sangle de ceinture de sécurité à position modifiable destiné à être fixé à une structure.

Comme on le sait, pour des raisons de sécurité, les véhicules de transport de passagers sont, habituellement, pourvus de sièges équipés de ceintures de sécurité. C'est par exemple le cas des aéronefs et des véhicules automobiles.

Pour les véhicules automobiles, on utilise habituellement des ceintures de sécurité à deux ou trois points d'ancrage. Lorsqu'on utilise une ceinture de sécurité à trois points d'ancrage, la sangle comprend un brin ventral et un brin pectoral qui traverse la poitrine du porteur à la manière d'une courroie de baudrier.

Lorsqu'on se sert d'une ceinture de sécurité de ce dernier type, le brin pectoral occupe une position, par rapport à son porteur, qui est fonction, à la fois, de la morphologie de celui-ci, de la géométrie du véhicule et du siège et, aussi, de l'état de fatigue de ce dernier. Dans ces conditions, le brin pectoral peut se trouver, dans certains cas, au niveau du cou du porteur. On comprend donc qu'en cas de collision violente, la ceinture de sécurité étant immobilisée sous la commande d'un détecteur d'inertie, le corps du passager se trouve violemment projeté en avant et son cou rencontre la sangle qui peut alors se comporter non plus comme un moyen de sécurité mais comme un objet particulièrement dangereux. En effet, on a pu observer, dans certains cas de collision, des lésions graves du cou provoquées par la ceinture de sécurité et, plus particulièrement, son brin pectoral.

C'est pourquoi on a déjà proposé de faire en sorte que le point d'amarrage supérieur du brin pectoral soit de position réglable pour tenir compte de la morphologie du porteur comparée à la configuration du véhicule.

Différents dispositifs ont déjà été proposés.

Très souvent ils sont d'une configuration telle que le point d'amarrage supérieur du brin pectoral peut occuper des positions multiples situées à l'intérieur d'un domaine dont l'amplitude tient compte des morphologies extrêmes d'une population, comparées à sa moyenne.

Ces dispositifs, qui sont parfois motorisés, sont d'une très grande complication. Ils font très souvent appel à des mécanismes du type vis et écrou qui permet donc de faire varier progressivement la position du point d'amarrage supérieur du brin pectoral.

D'autres modes de réalisation font appels à des cliquets et à des trous par rapport auxquels se déplacent des mécanismes à chariot mobile.

Une autre solution est exposée dans le document DE-A-24 60 092. Cette solution, dont des éléments sont exposés dans le préambule de la revendication principale, comprend essentiellement une gâche solidaire d'un corps fixe et en forme de crémaillère avec des échancrures inclinées et un pêne associé à un support de sangle apte à être engagé dans l'une de ces échancrures où il est maintenu par une plaque-presseur à ressort. Une telle solution ne donne pas satisfaction car par exemple des corps étrangers peuvent être introduits dans le corps et le rendre inutilisable.

On comprend donc que tous ces dispositifs sont compliqués ou peu fiables et d'un coût relativement élevé.

L'invention se propose de réaliser un dispositif de maintien pour sangle de ceinture de sécurité à position modifiable qui ne présente pas tous ces inconvénients, qui soit relativement simple et d'un coût de fabrication et de mise en place relativement modique.

L'invention a pour objet un dispositif de maintien pour sangle de ceinture de sécurité à position modifiable, destiné à être fixé à une structure, du type indiqué dans le préambule de la revendication principale et dont les particularités distinctives sont exposées notamment dans la partie caractérisante de celle-ci.

D'autres caractéristiques de l'invention ressortiront de la lecture de la description et des revendications qui suivent, et de l'examen du dessin annexé, donné seulement à titre d'exemple, où :

– la Fig. 1 est une vue de face schématique d'un mode de réalisation d'un dispositif selon l'invention ; et

– la Fig. 2 est une coupe longitudinale de la Fig. 1.

Les ceintures de sécurité et les agencements destinés à leur montage, en particulier les ceintures de sécurité pour véhicules automobiles étant bien connus dans la technique, la description qui suit sera limitée à ce qui concerne directement et indirectement l'invention. Pour le reste le spécialiste du secteur technique considéré pourra puiser dans les solutions classiques à sa disposition pour faire face aux problèmes particuliers qu'il a à résoudre.

Comme on le voit sur les figures du dessin, l'invention concerne un dispositif de maintien pour sangle de ceinture de sécurité à position modifiable destiné à être fixé à une structure ou coque 50 d'un véhicule. Plus particulièrement, la partie de structure considérée est le montant central ou pied de milieu qui se trouve entre les portières latérales avant et arrière d'un véhicule à quatre portes.

Le dispositif suivant l'invention comprend, entre autres, un corps 10, un verrou 20 et un support de sangle 30. Pour la commodité de la représentation, la sangle proprement dite n'est pas illustrée.

Comme on le voit, le corps 10 comprend un socle d'ancrage 11 et une embase 12 percée d'une fente 13. Dans le mode de réalisation illustré, ce corps se présente à la manière d'un étrier dont les branches parallèles 111 se terminent, chacune, par un rebord 112 et sont reliées par une barre 12 transversale qui constitue l'embase proprement dite. Comme on le peut observer, l'un des rebords 112 est engagé dans une ouverture 51 de la structure et l'autre des rebords 112 est percé d'un trou 113 destiné à coopérer avec un trou correspondant 52 de la structure pour recevoir un moyen de fixation tel que, par exemple, une vis et un écrou, comme illustré mais non référencé.

Le verrou 20 comprend une gâche 21, un pêne 22 et un ressort 23.

La gâche 21 se présente à la manière d'une barrette 211 dans laquelle est pratiqué un dégagement 212 où sont ménagés au moins deux crans 213 et un orifice 214, par exemple situé entre ces crans. Cette barrette est aussi munie d'appuis 215 et est pourvue de stries 216 à l'extérieur.

Comme on le voit le pêne 22 se compose, essentiellement, d'une barre 221 du support de sangle 30.

Le ressort 23 se présente à la manière d'une lame 231 dans laquelle est ménagée, approximativement en son milieu, une lumière 232 destinée à coopérer avec l'orifice 213 pour recevoir des moyens de retenue 233, tels que par exemple un rivet comme illustré.

Le support de sangle 30 est formé d'un bâti 31 par exemple en matière plastique moulée, dans lequel est ménagé un passage de sangle 32 et un ajour 33. La barre 221 du pêne 22 est, par exemple, une tige métallique conformée en forme d'anneau, approximativement trapézoïdale, et noyée dans la matière plastique du corps comme cela résulte des figures du dessin.

Les dimensions de l'orifice 214, ménagé dans la gâche 21, sont d'une taille telle qu'elles permettent d'y faire passer le pêne du support de sangle de manière à pouvoir le placer à l'intérieur du dégagement 212. Ceci fait, on peut engager les moyens de retenue 233, par exemple le rivet, dans cet orifice puis adapté sur celui-ci la lame de ressort 231 en y introduisant sa lumière 232.

On peut alors placer, si cela n'a pas été fait auparavant, ce sous-ensemble qui constitue le verrou proprement dit, dans le corps 10, comme illustré. Le corps 10 et le verrou 20 étant ainsi réunis il suffit alors d'engager l'un des rebords 112 dans l'ouverture 51 de la structure puis, ensuite, de fixer l'autre rebord à la structure à l'aide d'un moyen de fixation approprié telle que par exemple une vis et un écrou enfilés dans les trous 52 et 113, comme cela est illustré.

On voit alors que le pêne 22, sa barre 221, peut être placé dans l'un des crans 213 pratiqués dans le dégagement 212. Il suffit alors de presser sur la barrette 211 de la gâche 21, par exemple au niveau des stries 216 ; pour faire reculer la gâche 21 dans le corps 10 à l'encontre de l'effort développé par le ressort 23. Le pêne 22 se dégage alors du cran 213 de la gâche 21 et on peut le placer à volonté dans l'un ou l'autre des deux crans. Ceci fait, il suffit de relâcher la barrette 221 de la gâche pour que cette dernière, poussée par le ressort, revienne en direction du corps où ses appuis 215 sont appliqués à proximité des extrémités de la fente 13 contre l'embase 12. Ceci achevé, on voit immédiatement que le support de sangle 30 est immobilisé entre l'un des crans 213 et la face postérieure de l'embase 12 du corps 10 où se trouve ménagée la fente 13.

La gâche 21 du verrou 20 ne sert qu'à immobiliser, en hauteur le pêne 22 du support de sangle 30. En cas d'efforts à transmettre, c'est le corps 10 du dispositif suivant l'invention, fixé à la coque ou structure 50 qui subit et transmet toutes les contraintes dûes à une décélération brutale.

On voit donc que le dispositif suivant l'invention permet un réglage, commode et efficace avec un minimum de pièces, du point d'amarrage supérieur du brin pectoral de la sangle. Dans le mode de réalisation dessiné, on a seulement deux crans qui fixent les positions, modifiables à volonté, que peut prendre le support de sangle. Mais il est clair que l'on peut ménager d'autres crans qui fixent par exemple des positions intermédiaires entre les deux dessinées. Comme on a pu le constater, la gâche 21 est mobile entre une position de déclenchement où elle libère le pêne 22 que l'on peut déplacer à volonté et une position d'enclenchement où le pêne est emprisonné dans la position où il a été placé et vers laquelle elle est normalement sollicitée élastiquement par un ressort dont l'une des faces prend appui sur la barrette de la gâche et l'autre des faces prend appui sur la structure.

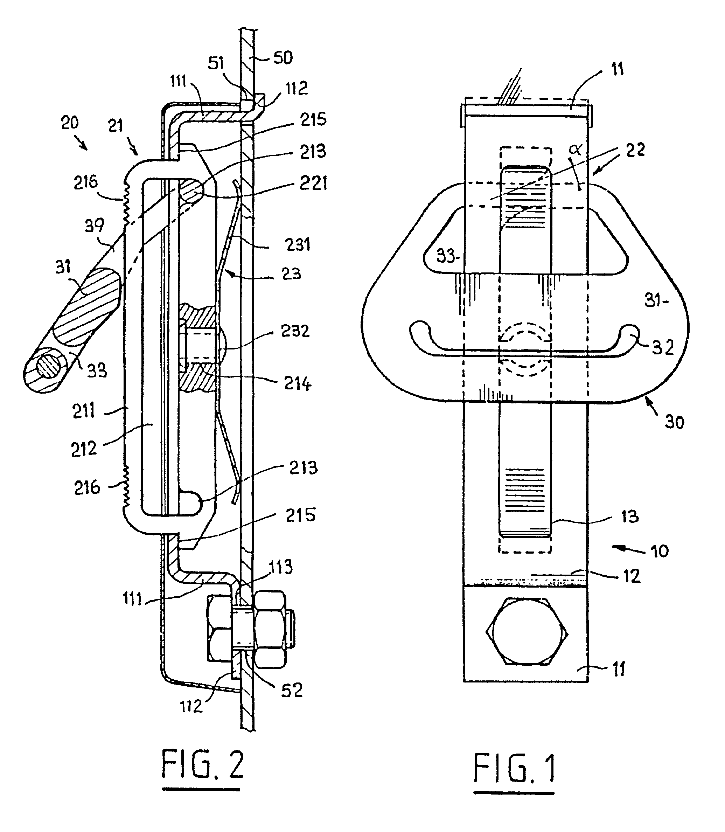

Pour des raisons de confort du passager, il est important que le pêne 22 ne reste pas avec une orientation pratiquement orthogonale à la direction de la fente 13. Pour ce faire, les bords du crans sont profilés, comme on le voit sur la Fig.1, de manière que le pêne, sous l'influence du support de sangle puisse s'incliner d'un angle $\alpha$ comme illustré. Cette inclinaison peut se faire seulement dans un sens ou dans les deux sens oppposés.

## Revendications

1. Dispositif de maintien pour sangle de ceinture de sécurité à position modifiable, destiné à être fixé à une structure (50) et constitué, entre autres, d'un corps (10) avec une embase (12) frontale et une fente (13), d'un verrou (20) avec une gâche (21), un pêne (22) associé à un support de sangle (30) et monté dans ce corps (10) de manière à être mobile relativement à celui-ci (10) et à cette gâche (21) afin de pouvoir être placé dans l'une quelconque d'au moins deux positions distinctes ainsi qu'avec un ressort (23) logé dans ce corps (10) et associé à cette gâche (21) pour normalement la solliciter vers cette embase (12), caractérisé en ce que

  * ce corps (10) comprend un socle d'ancrage (11) pour la fixation à cette structure (50),

  * la fente (13) est rectiligne et transperce longitudinalement cette embase (12),

  * la gâche (21) est engagée dans cette fente (13) de manière que le pêne (22) soit placé entre elle (21) et l'embase (12) et de manière à être mobile dans un plan pratiquement perpendiculaire à cette embase (12) entre une position de déclenchement où le pêne (22) n'est pas immobilisé et une position d'enclenchement où le pêne (22) est immobilisé dans la position où il a été placé sous la sollicitation de ce ressort (23),

  * le pêne (22) est monté mobile dans le corps (10) de manière à pouvoir se déplacer dans un plan parallèle à l'embase (12) lorsque la gâche (21) est dans sa position de déclenchement.

2. Dispositif selon la revendication 1, caractérisé en ce que ce corps (10) se présente sous la forme d'un étrier dont les branches (111) parallèles se terminent chacune par un rebord (112) constituant le socle d'ancrage et dont la barre (12) reliant les branches parallèles constitue l'embase (12).

3. Dispositif selon la revendication 2, caractérisé en ce que l'un des rebords (112) est destiné à s'engager dans une ouverture (51) correspondante de la structure (50) et l'autre des rebords (112) est percé d'un trou (113) destiné à être mis en correspondance avec un trou (52) correspondant de la structure (50) pour recevoir un moyen de fixation.

4. Dispositif selon l'une quelconque des revendications 1 à 3, caractérisé en ce que la gâche (21) a la configuration d'une barrette (211) où est ménagé un dégagement (212) sur la face intérieure duquel sont pratiqués au moins deux crans (213) pour recevoir à volonté le pêne (22) et un orifice (214) entre ceux-ci pour monter le ressort (23).

5. Dispositif selon la revendication 4, caractérisé en ce que l'orifice (214) a une taille qui permet le passage du pêne (22) au montage.

6. Dispositif selon la revendication 4 ou 5, caractérisé en ce que le ressort (23) se présente à la manière d'une lame (231) percée au voisinage de son milieu d'une lumière (232) coopérant avec l'orifice (214) de la barrette (211) pour recevoir des moyens de retenue (233) et conformée de manière qu'une de ses faces prenne appui sur la barrette (211) et l'autre de ses faces prenne appui sur la structure (50).

7. Dispositif selon l'une quelconque des revendications 1 à 6, caractérisé en ce que le pêne (22) se présente à la manière d'une barre (221) solidaire du support de sangle (30).

8. Dispositif selon l'une quelconque des revendications 1 à 7, caractérisé en ce que le support de sangle (30) est transpercé d'un passage (32) de sangle orienté approximativement parallèlement au pêne (22).

9. Dispositif selon la revendication 8, caractérisé en ce que le passage (32) sert de renvoi pour le brin pectoral d'une sangle.

10. Dispositif selon la revendication 8 ou 9, caractérisé en ce que le support de sangle (30) est transpercé d'un ajour (33) approximativement parallèle au pêne (22) et en ce que ce passage (32) est situé entre pêne (22) et ajour (33).

11. Dispositif selon l'une quelconque des revendications 1 à 10, caractérisé en ce que la gâche (21) comprend des appuis (215) qui coopèrent avec le corps (10) pour fixer la position de la gâche (21) en position d'enclenchement.

12. Dispositif selon l'une quelconque des revendications 4 à 11, caractérisé en ce que les bords des crans (213) sont profilés pour permettre au pêne (22) de s'incliner, au moins dans un sens, d'un angle déterminé α.

## Ansprüche

1. Haltevorrichtung für einen Sicherheitsgurt mit verstellbarer Position, die zur Befestigung an einer Struktur (50) bestimmt ist und u.a. gebildet wird durch einen Körper (10) mit einem stirnseitigen Basisteil (12) und einem Schlitz (13), ein Schloß (20) mit einem Schließhaken (21) und einem Riegel (22), der einem Gurthalter (30) zugeordnet und derart in dem Körper (10) montiert ist, daß er relativ zu diesem (10) und zu dem Schließhaken (21) beweglich ist, so daß er in einer beliebigen von wenigstens zwei verschiedenen Positionen plaziert werden kann, und mit einer in dem Körper (10) untergebrachten und dem Schließhaken (21) zugeordneten Feder (23), die den Schließhaken normalerweise in Richtung auf das Basisteil (12) vorspannt, dadurch **gekennzeichnet,** daß

  – der Körper (10) einen Verankerungssockel (11) für die Befestigung an der Struktur (50) aufweist,

  – der Schlitz (30) geradlinig in Längsrichtung durch das Basisteil (12) verläuft,

  – der Schließhaken (21) derart in den Schlitz (13) eingreift, daß der Riegel (22) zwischen dem Schließhaken (21) und dem Basisteil (12) plaziert wird, und daß der Schließhaken in einer im wesentlichen rechtwinklig zu dem Basisteil (12) orientierten Ebene zwischen einer Entriegelungsstellung, in der der Riegel (21) nicht fixiert ist, und einer Verriegelungsstellung bewegbar ist, in der der Riegel (22) unter der Vorspannung der Feder (23) in der Position fixiert ist, in der er plaziert wurde,

  – und daß der Riegel (22) derart beweglich in dem Körper (10) montiert ist, daß er in einer zu dem Basisteil (12) parallelen Ebene verschiebbar ist, wenn sich der Schließhaken (21) in seiner Entriegelungsstellung befindet.

2. Vorrichtung nach Anspruch 1, dadurch

gekennzeichnet, daß der Körper (10) die Form eines Bügels aufweist, dessen parallele Arme (111) jeweils in einem den Verankerungssockel bildenden umgebogenen Rand (112) enden und dessen die parallelen Arme verbindendes Querstück (12) das Basisteil (12) bildet.

3. Vorrichtung nach Anspruch 2, dadurch gekennzeichnet, daß einer der umgebogenen Ränder (112) für den Eingriff in eine entsprechende Öffnung (51) der Struktur (50) ausgebildet ist und der andere der umgebogenen Ränder (112) von einem Loch (113) durchsetzt wird, das mit einem entsprechenden loch (52) der Struktur (50) ausrichtbar ist, um ein Befestigungsmittel aufzunehmen.

4. Vorrichtung nach einem der Ansprüche 1 bis 3, dadurch gekennzeichnet, daß der Schließhaken (21) die Form eines Stabes (211) aufweist, in dem eine Höhlung (212) ausgebildet ist, auf deren Innenfläche wenigstens zwei Kerben (213) zur wahlweisen Aufnahme des Riegels (22) und eine zwischen diesen angeordnete Öffnung (214) zur Befestigung der Feder (23) ausgebildet sind.

5. Vorrichtung nach Anspruch 4, dadurch gekennziechnet, daß die Öffnung (214) so bemessen ist, daß sie den Durchtritt des Riegels (2 2) bei der Montage gestattet.

6. Vorrichtung nach Anspruch 4 oder 5, dadurch gekennzeichnet, daß die Feder (23) als Blattfeder (231) ausgebildet ist, die in der Nähe ihrer Mitte von einer Öffnung (132) durchsetzt ist, die mit der Öffnung (214) des Stabes (211) zusammenwirkt um Haltemittel (233) aufzunehmen und die so gestaltet ist, daß sie sich mit einer Seite an dem Stab (211) und mit der anderen Seite an der Struktur (50) abstützt.

7. Vorrichtung nach einem der Ansprüche 1 bis 6, dadurch gekennzeichnet, daß der Riegel (22) eine einstückig mit dem Gurthalter (30) ausgebildete Stange (221) ist.

8. Vorrichtung nach einem der Ansprüche 1 bis 7, dadurch gekennzeichnet, daß der Gurthalter (30) eine annähernd parallel zu dem Riegel (22) orientierte Gurtöse (32) aufweist.

9. Vorrichtung nach Anspruch 8, dadurch gekennzeichnet, daß die Öse (32) als Wendepunkt für den Brustriemen eines Gurtes dient.

10. Vorrichtung nach Anspruch 8 oder 9, dadurch gekennzeichnet, daß der Gurthalter (30) einen annähernd parallel zu dem Riegel (22) orientierten Durchbruch (33) aufweist und daß die Öse (32) zwischen dem Riegel (22) und dem Durchbruch (33) angeordnet ist.

11. Vorrichtung nach einem der Ansprüche 1 bis 10, dadurch gekennzeichnet, daß der Schließhaken (21) Anlageflächen (215) aufweist, die mit dem Körper (10) zusammenwirken um die Position des Schließhakens (21) in der Verriegelungsstellung festzulegen.

12. Vorrichtung nach einem der Ansprüche 4 bis 11, dadurch gekennzeichnet, daß die Ränder der Kerben (213) derart profiliert sind, daß sie ein Kippen des Riegels (22) wenigstens in einer Richtung um einen vorgegebenen Winkel α gestatten.

## Claims

1. A device for retaining the strap of a safety belt in an adjustable position, adapted to be attached to a structure (50) and formed inter alia by a body (10) having a frontal base (12) and a slot (13), a lock (20) with a keeper (21), and a catch (22) associated with a strap holder (30) and mounted in the body (10) movable in relation to the body (10) and the keeper (21) so that the catch can be placed in either one of at least two distinct positions, a spring (23) being provided for normally biasing keeper (21) towards said base (12), characterised in that
   * said body (10) comprises an anchoring support (11) for attachment to said structure (50),
   * the slot (13) is rectilinear and extends longitudinally through the base (12),
   * the catch (21) engages in the slot (13) in such a way that the catch (22) is placed between the keeper (21) and the base (12) and in such a way that the catch (22) can move in a plane substantially perpendicular to the base (12) between a disengaging position in which the catch (22) is not immobilized and an engaging position in which the catch (22) is immobilized in the position into which it was biased by the spring (23), and
   * the catch (22) is movably mounted in the body (10) so that the catch (22) can be displaced in a plane parallel with the base (12) when the keeper (21) is in its disengaging position.

2. A device according to claim 1, characterized in that said body (10) takes the form of a stirrup whose parallel branches (111) each terminate in a flange (112) forming the anchoring support and whose bar (12) interconnecting the parallel branches forms the base (12).

3. A device according to claim 2, characterized in that one of the flanges (112) is adapted to be engaged in a corresponding opening (51) in the structure (50), the other flange (112) being formed with an aperture (113) adapted to register with a corresponding aperture (52) in the structure (50) for receiving a fixing means.

4. A device according to any of claims 1 to 3, characterized in that the keeper (21) has the shape of a ring (211) formed with a cavity (212) whose inner face is formed with at least two notches (213) for receiving as desired the catch (22) and an orifice (214) between the notches for mounting the spring (23).

5. A device according to claim 4, characterized in that the orifice (214) is of a size such as to permit the passage of the catch (22) during assembly.

6. A device according to claims 4 or 5, characterized in that the spring (23) takes the form of a strip (231) formed adjacent its centre with an opening (232) cooperating with the orifice (214) of the bar (211) to receive retaining means (233) and so shaped that one of its faces bears against the bar (211), its other face bearing against said structure (50).

7. A device according to any of claims 1 to 6, characterized in that the catch (22) takes the form of a cross-bar (221) connected to the strap holder (30).

8. A device according to any of claims 1 to 7, characterized in that the strap holder (30) is formed with a strap passage (32) oriented substantially parallel with the catch (22).

9. A device according to claim 8, characterized in that the passage (32) acts as a strap return means for the chest part of a safety belt.

10. A device according to claims 8 or 9, characterized in that the strap holder (30) is formed with a slot (33) which is substantially parallel with the catch (22), said passage (32) being located between the catch (22) and the slot (33).

11. A device according to any of claims 1 to 10, characterized in that the keeper (21) comprises bearing surfaces (215) which cooperate with said body (10) to determine the position of the keeper (21) in the engaging position.

12. A device according to any of claims 4 to 11, characterized in that the edges of the notches (213) are so profiled as to enable the catch (22) to be inclined by a predetermined angle $\alpha$, at least in one direction.

FIG. 2

FIG. 1